# EUROPÄISCHE PATENTANMELDUNG

(11) **EP 1 359 075 A2**
(43) Veröffentlichungstag der Anmeldung: **05.11.2003**
(21) Anmeldenummer: 03005882.0
(22) Anmeldetag: 15.03.2003
(51) Int. Cl.: B60T 7/04, B60T 11/04, B60T 17/22

(54) **Montagevorrichtung für einen Seilzug einer Feststellbremse eines Kraftfahrzeuges**

(30) Priorität: 04.05.2002 DE 10220016
(71) Anmelder: Dr.Ing. h.c.F. Porsche Aktiengesellschaft, 70435 Stuttgart (DE)
(72) Erfinder: Grundke, Edgar, 71254 Ditzingen (DE)

(57) **Zusammenfassung**

Damit ein Seilzug in einem Spreizschloß einer Bremseinrichtung für ein Kraftfahrzeug in einfacher Weise montierbar ist, ist eine sogenannte Seillose des Seilendes im Bereich des Spreizschlosses erforderlich. Damit diese Seillose in einfacher Weise wieder aufgehoben werden kann, ist eine Halteeinrichtung im Radträger vorgesehen, welche aus einer Verschiebehülse und einer Festsetzhülse besteht, zwischen denen Arretiermittel angeordnet sind, so daß bei einer Verlagerung der Verschiebehülse in der Festsetzhülse die Seillose aufgehoben werden kann.

## Beschreibung

Die Erfindung bezieht sich auf eine Montageeinrichtung für ein Seilzug einer Fuß-Feststellbremse insbesondere für eine Fuß-Feststellbremse eines Kraftfahrzeugs.

Aus der DE 38 05 046 A1 ist eine Vorrichtung zur automatischen Längenverstellung eines Bowdenzuges bekannt, welche aus quer zu einer Schlauchbuchse verschiebbare Distanzscheiben bestehen, die auf dem Schlauch aufliegen und nacheinander auf das Schlauchende fallen, wenn dieses infolge betriebsbedingter Schlauchverkürzung bzw. Seilverlängerung aus der Aufnahmebohrung gedrückt wird.

Die Aufgabe der Erfindung für eine Montagevorrichtung besteht darin, diese für einen Seilzug einer Feststellbremse so auszugestalten, daß ein einfaches Verbinden eines Seilendes mit einem Spreizschloß einer Backenbremseinrichtung gewährleistet ist.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß ein Seilzug für eine Feststellbremse in einfacher Weise bei schon eingebauter Bremseinrichtung montierbar ist, das heißt daß der Seilzug eine sogenannte "Seillose" aufweist und in das Spreizschloß der Bremseinrichtung einfach einhängbar ist und danach das Seil über die Montage bzw. Halteeinrichtung gespannt werden kann. Hierzu umfaßt die Halteeinrichtung insbesondere eine Verschiebehülse mit einer am Radträger anliegenden Festsetzhülse. In dieser ist die Verschiebehülse von einer Montageposition mit einem mit einer Seillose zum Spreizschloß versehenen Seilende axial verschiebbar in eine Festsetzposition, mit einem dann im Spreizschloß gespannten Seilende in der Festsetzhülse verstellbar. Durch diese Halteeinrichtung kann das Seil einerseits eine Seillose zum Montieren aufweisen und andererseits kann es in einfacher wieder Weise gespannt werden.

Die Verschiebehülse weist einen ersten am Radträger unmittelbar anliegenden Hülsenansatz auf, an den sich ein in der Festsetzhülse fortgesetztes und im Durchmesser größeres Hülsenteil anschließt. Zwischen dem Hülsenteil der Verschiebehülse und der Festsetzhülse sind Arretiermittel angeordnet, die in der Montageposition ein Verschieben in der Festsetzhülse ermöglichen und in der Festsetzposition sperrend in einer Ausnehmung der Festsetzhülse angeordnet sind. Durch diese Ausbildung der Verschiebehülse in der Festsetzhülse mit den zwischengesetzten Arretiermitteln wird erreicht, daß die Verschiebehülse unter Mitnahme der Seilhülle von der Montageposition in die Festsetzposition verschiebbar ist und in dieser Festsetzposition ein Kraftfluß vom Radträger über die Festsetzhülse und über die Arretiermittel und über den Anschlagring in den Haltering und dann in die Verschiebehülse verläuft.

Insbesondere wird in der Festsetzposition die Ausnehmung für die Arretiermittel von einem Anschlagring begrenzt, der mit der Verschiebehülse verbunden und über einen eingesetzten Haltering festsetzbar ist. Der Anschlagring ist insbesondere zwischen dem eingesetzten Haltering und einem an der Verschiebehülse angedrehten weiteren Haltering angeordnet.

Der Anschlagring wird durch den Haltering und einem Absatz in der Verschiebehülse in seiner Position gehalten. Der Durchmesser dieses Absatzes ist so gewählt, daß bei einer evtl. erforderlichen Demontage des Seiles die Festsetzhülse mit Arretiermittel nach dem Entfernen des Halteringes zurückgeschoben werden kann. Dadurch wird ein einfaches Aushängen des Seilnippels ermöglicht.

Durch die Montageeinrichtung wird zudem erreicht, daß die Einstellung der Seillänge nicht durch die Nachstellung des Seiles an der Fußfeststellbremse aufgebraucht wird.

Ein Ausführungsbeispiel der Erfindung ist in den Zeichnungen dargestellt und wird im folgenden näher beschrieben.

Es zeigen
- Fig. 1: eine Ansicht auf eine Montageeinrichtung im Radträger mit Verschiebehülse und Festsetzhülse in einer Montageposition bei losem Seilende im Spreizschloß,
- Fig. 2: eine Ansicht auf die Montageeinrichtung gem. Fig. 1 in einer Festsetzposition bei gespanntem Seilende im Spreizschloß,
- Fig. 3: eine vergrößerte Darstellung der Montageeinrichtung gem. Fig. 1 in einer Montageposition und

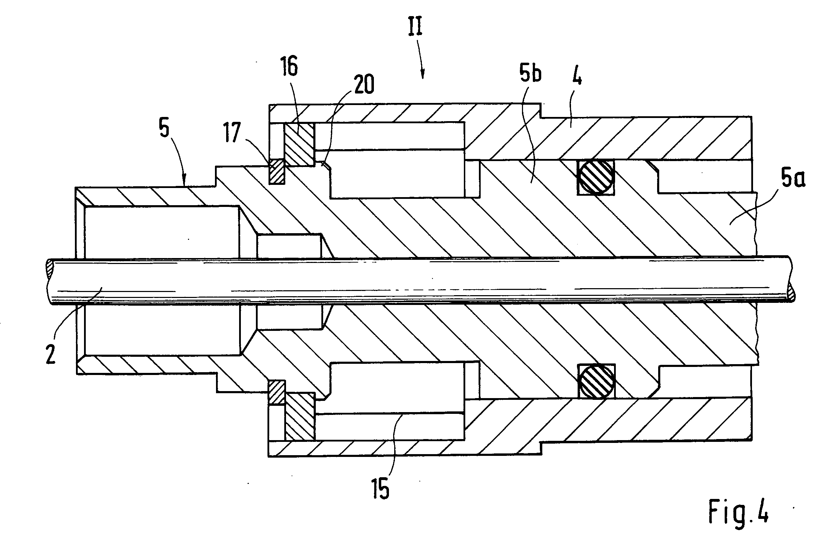

- Fig. 4: eine vergrößerte Darstellung der Montageeinrichtung gem. Fig. 2 in einer Festsetzposition.

Die Halteeinrichtung 1 für ein Seil 2 eines Seilzuges 3 einer Fußfeststellbremse umfaßt im wesentlichen ein in einer Festsetzhülse 4 axial bewegbaren Verschiebehülse 5. Die Festsetzhülse 4 liegt an einem Radträger 6, der nur angedeutet ist, an. Eine Seilhülle 7 ist in der Verschiebehülse 5 festgesetzt und das Seil 2 durchdringt die Verschiebehülse 5 und ist in Pfeilrichtung A zu einer Übertragungseinrichtung (einer nicht gezeigten Fußfeststellbremse) und in Pfeilrichtung B zu einem Spreizschloß 10 an der Backenbremseinrichtung geführt.

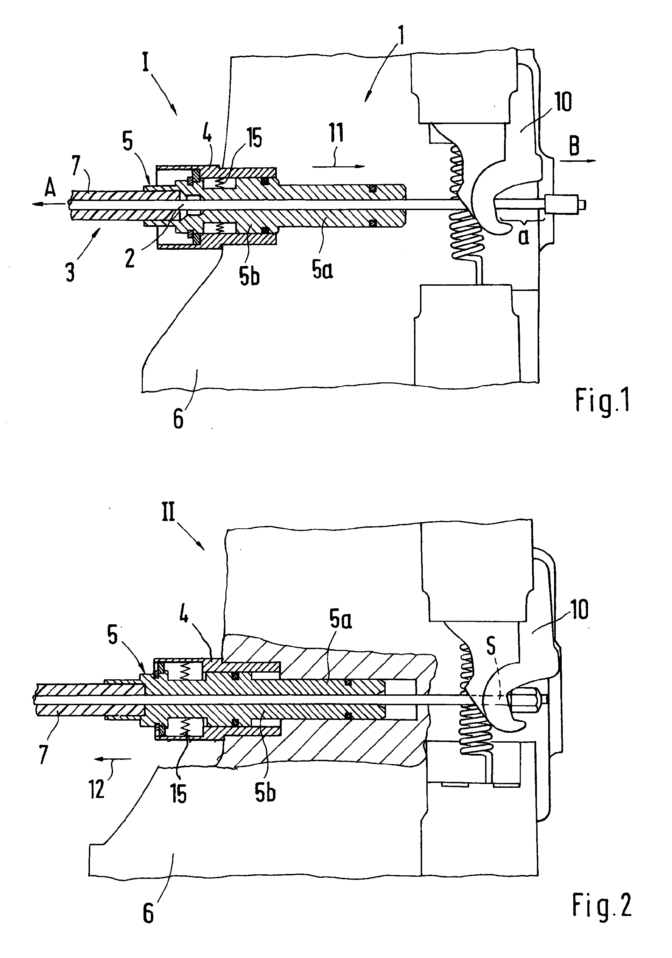

In Fig. 1 ist die Montageposition I gezeigt, bei der das Seil 2 zum Einhängen in das Spreizschloß 20 mit einer sogenannten "Seillose" beispielsweise mit dem Maß a ausgeführt, so daß ein Befestigen mit diesem Spreizschloß 10 in einfacher Weise vorgenommen werden kann. Damit diese Seillose erreichbar ist, wird die Verschiebehülse 5 in Pfeilrichtung 11 im Radträger 6 zusammen mit der Festsetzhülse 4 axial verschoben.

In Fig. 2 ist die Festsetzposition II gezeigt, bei der die Seillose mit dem Maß a aufgehoben ist und das Seilende gespannt im Spreizschloß 10 gehalten wird. Hierzu wird die Verschiebehülse 5 in der Festsetzhülse 4 in Pfeilrichtung 12 verschoben, wobei die Hülse 4 in ihrer Lage am Radträger 6 von Hand festgehalten wird.

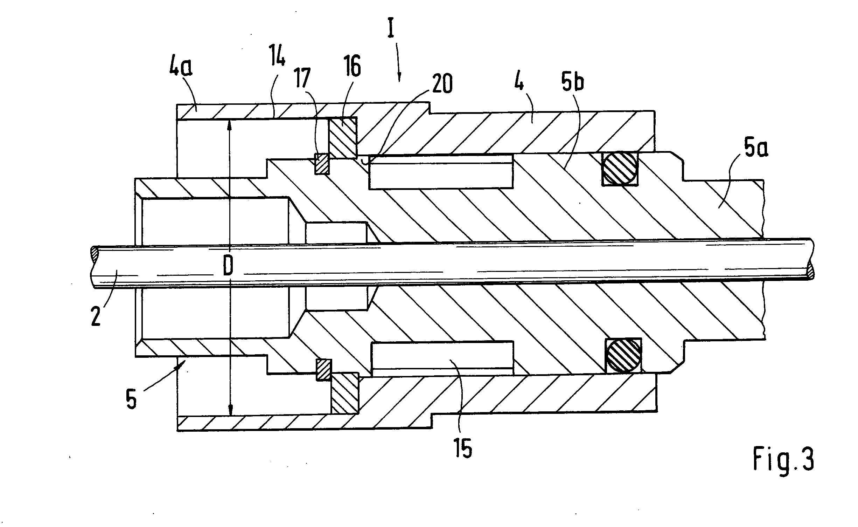

Die Verschiebehülse 5 weist einen unmittelbar im Radträger 6 gehaltenen ersten Hülsenansatz 5a auf, an den sich ein im Durchmesser größeres zweites Hülsenteil 5b anschließt, das mit einer Ausnehmung versehen ist, in welcher federnde Arretiermittel 15, wie beispielsweise Blattfedern oder gleichwirkende Federmittel angeordnet sind, wie insbesondere Fig. 3 näher zeigt.

Die Seilhülle 7 ist stirnseitig der Verschiebehülse 5 abgestützt, so daß bei einem Verschieben der Hülse 5 relativ zur Festsetzhülse 4 die Seilhülle 7 mit Seil 2 in Pfeilrichtung 12 mitgenommen wird. Wenn ein abgesetzter und mit einem größeren Durchmesser D versehener Bereich 14 in der Festsetzhülse 4 im Abschnitt 4a erreicht ist, können die Arretiermittel 15, begrenzt durch einen Anschlagring 16 an der Verschiebehülse 5, sich an der Festsetzhülse 4 abstützen. Der Anschlagring 16 ist zwischen Halteringen 17 und 20 der Verschiebehülse 5 gehalten. In dieser Festsetzposition II ist die Seillose, wie Fig. 2 näher zeigt, vollständig aufgehoben.

Ein sogenannter Kraftfluß erfolgt bei einer Belastung der Fußfeststellbremse in der Festsetzposition II vom Radträger 6 über die Festsetzhülse 4 und über die Arretiermittel 15 zum Anschlagring 16 und von hier aus über den Haltering 17 in die Verschiebehülse 5.

## Patentansprüche

1. Montageeinrichtung für einen Seilzug einer Feststellbremse eines Kraftfahrzeugs, insbesondere für eine Fuß-Feststellbremse, wobei eine Seilhülle des Seilzugs über eine Halteeinrichtung in einem Radträger angeordnet ist und ein in der Seilhülle geführtes Seil mit seinem einen Ende in einem Spreizschloß einer Bremseinrichtung einhängbar ist und mit seinem anderen abgekehrten Seilende in einer Übertragungseinrichtung gehalten wird, die mit einem Pedal einer Feststellbremse verbindbar ist, **dadurch gekennzeichnet, daß** die Halteeinrichtung (1) eine Verschiebehülse (5) mit einer am Radträger (6) anliegenden Festsetzhülse (4) umfaßt, in welcher die Verschiebehülse (5) von einer Montageposition (I) mit einem mit einer Seillose (a) gehaltenem Seilende zum Spreizschloß (10) axial verschiebbar in eine Festsetzposition (II) mit einem im Spreizschloß (10) gespannt gehaltenem Seilende (S) in der Festsetzhülse (4) verstellbar ist.

2. Einrichtung nach Anspruch 1, **dadurch gekennzeichnet, daß** die Verschiebehülse (5) einen ersten im Radträger (6) unmittelbar gehaltenen Hülsenansatz (5a) aufweist, an den sich ein in der Festsetzhülse (4) fortgesetztes im Innendurchmesser größeres weiteres Hülsenteil (5b) anschließt.

3. Einrichtung nach den Ansprüchen 1 oder 2, **dadurch gekennzeichnet, daß** zwischen dem Hülsenteil (5b) der Verschiebehülse (5) und der Festsetzhülse (4) Arretiermittel (15) angeordnet sind, die in der Montageposition (I) verschiebbar zur Festsetzhülse (4) und in der Festsetzposition (II) sperrend in einer Ausnehmung (14) der Festsetzhülse (4) angeordnet sind.

4. Einrichtung nach den Ansprüchen 1, 2 oder 3, **dadurch gekennzeichnet, daß** die Arretiermittel (15) aus Blattfedern oder radial vorgespannten Federmitteln bestehen.

5. Einrichtung nach den Ansprüchen 1, 2, 3 oder 4, **dadurch gekennzeichnet, daß** die Ausnehmung (14) in der Festsetzhülse (4) von einem mit einem großen Innendurchmesser (D) versehenen Abschnitt (4a) der Festsetzhülse (4) gebildet wird, der in der Festsetzposition (II) von einem Anschlagring (16) begrenzt ist, der mit der Verschiebehülse (5) verbunden und zwischen Halteringen (17, 20) festgesetzt ist.

6. Einrichtung nach einem oder mehreren der vorhergehenden Ansprüche, **dadurch gekennzeichnet, daß** der Anschlagring (16) zwischen einem eingesetzten Haltering (17) und einem an der Verschiebehülse (5) angedrehten weiteren Haltering (20) angeordnet ist.

7. Einrichtung nach einem oder mehreren der vorhergehenden Ansprüche, **dadurch gekennzeichnet, daß** die Verschiebehülse (5) unter Mitnahme der Seilhülle (7) von der Montageposition (I) in die Festsetzposition (II) verschiebbar ist und in dieser Position (II) ein Kraftftluß vom Radträger (6) über die Festsetzhülse (4), die Arretiermittel (15), dem Anschlagring (16) und über den Haltering (17) in die Verschiebehülse (5) verläuft.
